# EUROPÄISCHE PATENTSCHRIFT

(11) **EP 1 261 936 B1**
(45) Veröffentlichungstag und Bekanntmachung des Hinweises auf die Patenterteilung: **24.11.2010**
(21) Anmeldenummer: 01902418.1
(22) Anmeldetag: 06.02.2001
(51) Int. Cl.: G06K 17/00

(54) **VERFAHREN UND VORRICHTUNG ZUM PERSONALISIEREN VON CHIPKARTEN**
METHOD AND DEVICE FOR PERSONALISING CHIP CARDS
PROCEDE ET DISPOSITIF DE PERSONNALISATION DE CARTES A PUCE

(30) Priorität: 07.02.2000 DE 10004950
(43) Veröffentlichungstag der Anmeldung: 04.12.2002
(73) Patentinhaber: Giesecke & Devrient GmbH, 81677 München (DE)
(72) Erfinder: BUTZ, Klaus, 81675 München (DE)
(74) Vertreter: Klunker . Schmitt-Nilson . Hirsch
(86) Internationale Anmeldenummer: PCT/EP2001/001268
(87) Internationale Veröffentlichungsnummer: WO 2001/057789

(56) Entgegenhaltungen:
- EP-A- 0 266 926
- EP-A- 0 311 417
- US-A- 5 410 642
- US-A- 5 799 316
- DATABASE WPI Week 199250, Derwent Publications Ltd., London, GB; Class G02, AN 1992-415737 KITAMI K; TAJIMA S: 'Improved invisible ink compsn. used for identification cards and bar-codes - comprises fluorescent pigment having no light absorption in visible region and a vehicle transparent to the light and emitted fluorescence' & WO 92 20748 A1 (DAINIPPON PRINTING CO LTD) 26 November 1992

## Beschreibung

Die Erfindung betrifft ein Verfahren bzw. eine Vorrichtung zum Personalisieren von Chipkarten gemäß dem Oberbegriff des Anspruchs 1 bzw. des Anspruchs 10.

Bei der Personalisierung von Chipkarten ist es bekannt, die optische Personalisierung, d.h. das Beschreiben der Chipkartenoberfläche mit personen- bzw. herausgeberbezogenen Daten und die elektrische Personalisierung, d.h. das Einspeichern der personen- bzw. herausgeberbezogenen Daten in den integrierten Schaltkreis der Karte in getrennten Arbeitsschritten vorzunehmen.

Aus der europäischen Patentanmeldung EP-OS 0 266 926 ist ein Verfahren bekannt, bei dem ein nicht personalisierter Kartenkörper mit einem nicht personalisierten Magnetstreifen und einem nicht personalisierten Chip an einen Encoder zur Magnetstreifenbeschriftung geführt wird, anschließend wird die IC-Personalisierung vorgenommen. Die IC-Personalisierung wird auf Richtigkeit und Vollständigkeit überprüft, um anschließend im nächsten Schritt die Beschriftung, d.h. die optische Personalisierung des Kartenkörpers durchzuführen.

Aus der europäischen Patentschrift EP-PS 0 311417 ist es bekannt, zunächst den integrierten Schaltkreis zu personalisieren und für die nachfolgende Personalisierung des Kartenkörpers, d.h. der optischen Personalisierung, bzw. der Personalisierung des Magnetstreifens, die Daten aus dem Chip auszulesen und für die optische bzw. magnetische Personalisierung zu verwenden. Auf diese Weise kann erreicht werden, daß die Beschriftung des Kartenkörpers mit den richtigen Daten erfolgt. Bei dieser Vorgehensweise ist es notwendig, daß zumindest bei der optischen bzw. magnetischen Personalisierung der Chip bzw. das Modul bereits im Kartenkörper eingebaut ist. Aus der US-Patentschrift US 5,799,316 ist ein Verfahren zum Personalisieren von tragbaren Datenträgern mit integrierten Schaltkreisen bekannt. Die Datenträger werden sowohl optisch als auch elektrisch personalisiert, wobei die im Speicher abgelegten Daten und die sichtbar auf dem Kartenkörper aufgebrachten Daten korreliert sind. Die integrierten Schaltkreise und die Kartenkörper werden getrennt voneinander personalisiert, wobei bei der Erzeugung der Personalisierungsdaten zu den einzelnen Datensätzen jeweils eine Referenznummer gebildet wird, welche bei der Personalisierung des Kartenkörpers nicht sichtbar aufgebracht wird.

Ein Fehler bei der optischen Personalisierung führt dazu, daß die komplette Karte incl. dem integrierten Schaltkreis unbrauchbar wird.

Desweiteren sind Personalisierungsanlagen bekannt, bei denen der Werkstückträger, auf dem der zur Personalisierung vorgesehene Datenträger aufgebracht wird, mit einer Referenzinformation versehen ist. In diesem Fall wird die Referenzinformation des Werkstückträgers bei der elektrischen Personalisierung ausgelesen und mit Hilfe der Referenzinformation wird der Datensatz für die elektrische Personalisierung ermittelt.

Eine weitere bekannte Realisierung besteht darin, daß zur elektrischen Personalisierung zumindest teilweise die Daten der optischen Personalisierung mit einer Kamera erfaßt, durch eine Schrifterkennung ermittelt und so der richtige Datensatz für die elektrische Personalisierung zugeordnet wird.

Die Nachteile dieser bekannten Verfahrensweisen bestehen darin, daß bei der Zuordnung der Referenzinformation auf den Werkstückträger eine Verwechslung nicht ausgeschlossen ist bzw. die Ermittlung der Datensätze für die elektrische Personalisierung sehr aufwendig ist.

Aufgabe der Erfindung ist es deshalb, ein Verfahren bzw. eine Vorrichtung anzugeben, bei der die richtige Zuordnung der Daterisätze für die optische Personalisierung und die elektrische Personalisierung auf einfache Weise sichergestellt werden kann.

Diese Aufgabe wird ausgehend vom Oberbegriff des Anspruchs 1 bzw. des Anspruchs 7 durch die kennzeichnenden Merkmale der jeweiligen Ansprüche gelöst.

Vorteilhafte Ausgestaltungen der Erfindung sind in den abhängigen Ansprüchen angegeben.

Die Erfindung beschreibt ein Verfahren zum Personalisieren von Chipkarten. Die zu personalisierenden Chipkarten weisen zum einen zumindest eine ebene Oberfläche auf, welche zur optischen Personalisierung geeignet ist. Im weiteren enthält die Chipkarte einen integrierten Schaltkreis, welcher elektrisch personalisiert werden muß. Gemäß der Erfindung wird vorgesehen, daß bei der Erzeugung der Personalisierungsdaten den einzelnen Datensätzen jeweils einen Referenznummer zugeordnet wird. Die Referenznummer wird bei der Personalisierung des Kartenkörpers auf dem Kartenkörper in einer Weise angeordnet, daß sie nicht sichtbar ist.

Auf diese Weise wird erreicht, daß eine eindeutige Zuordnung der Datensätze ermöglicht wird. Die auf dem Datenträger angeordnete Referenznummer führt unmittelbar zum jeweils zugehörigen Personalisierungsdatensatz.

Insbesondere bei der elektrischen Personalisierung, d.h. zum Einschreiben der personen- bzw. herausgeberbezogenen Daten in die integrierten Schaltkreise wird zunächst die auf dem Kartenkörper angeordnete Referenznummer ausgelesen. Mit Hilfe dieser Referenznummer wird der Datensatz für die elektrische Personalisierung ausgewählt und die Karte kann damit durch die elektrische Personalisierung vervollständigt werden.

Vorzugsweise wird die Referenznummer als Barcode auf den Kartenkörper aufgebracht, wobei die Aufbringung günstigerweise auf der Kartenrückseite erfolgt. Der Aufdruck mit der nicht sichtbaren Referenznummer kann sowohl durch unsichtbare Tinte als auch durch die Verwendung fluoreszierender Stoffe erfolgen.

Gemäß der Erfindung ist weiterhin eine Vorrichtung zur Personalisierung von Chipkarten angegeben, welche sich insbesondere dadurch auszeichnet daß sie eine gemeinsame Datenbank enthält, in der die Daten für die optische Personalisierung sowie die Daten für die elektrische Personalisierung zusammen mit der Referenznummer abgelegt werden können.

Dabei kann die gemeinsame Datenbank auch so ausgeführt sein, daß die Daten für die optische bzw. für die elektrische Personalisierung getrennt abgelegt werden, wobei den jeweiligen Datensatzteilen jeweils eine gemeinsame Referenznummer zugeordnet ist.

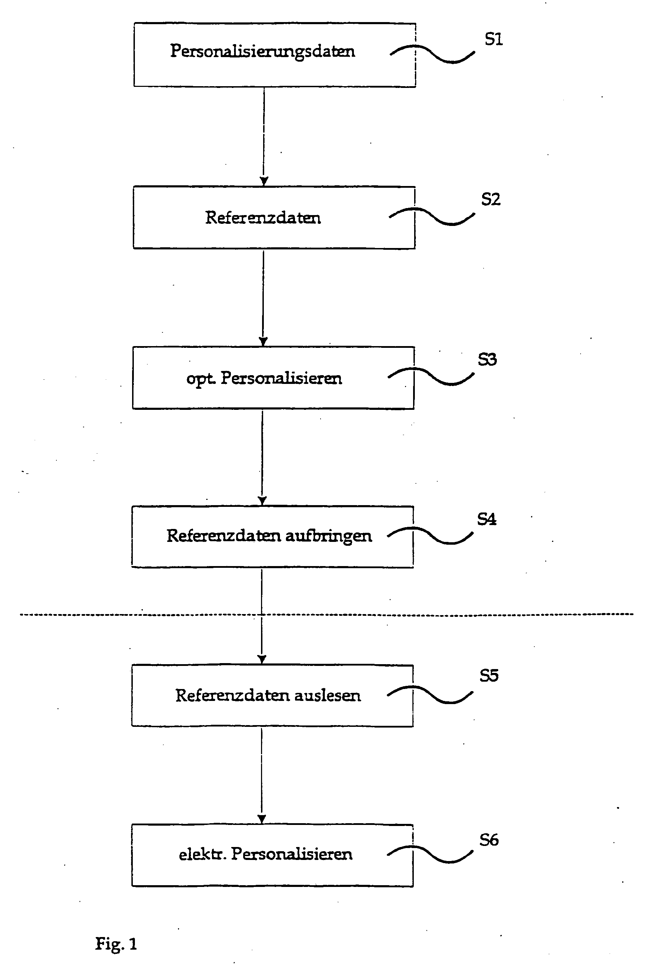

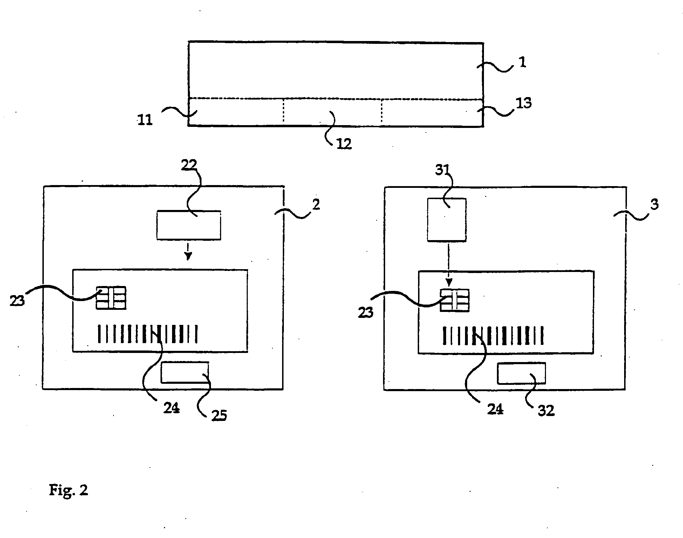

Im folgenden wird die Erfindung anhand der Fig. 1 und 2 näher erläutert.

Es zeigen:
- Fig. 1: ein Ablaufdiagramm für die erfindungsgemäße Personalisierung und
- Fig. 2: ein Blockschaltbild der erfindungsgemäßen Vorrichtung.

In Fig. 1 ist ein Ablaufdiagramm für die Personalisierung von tragbaren Datenträgern gemäß der Erfindung dargestellt. In einem ersten Schritt S1 werden die Personalisierungsdaten gebildet. Die Personalisierungsdaten beinhalten zum einen die Daten für die optische Personalisierung und zum anderen die Daten für die elektrische Personalisierung.

In einem zweiten Schritt S2 werden zu den Personalisierungsdaten Referenzdaten gebildet und zusammen mit den Personalisierungsdaten abgespeichert.

Im ersten Personalisierungsschritt S3 wird der tragbare Datenträger optisch personalisiert, d.h. es werden die personen- bzw. herausgeberspezifischen Daten sichtbar auf die Kartenoberfläche aufgebracht.

Gleichzeitig oder unmittelbar darauf folgend werden im Zuge der optischen Personalisierung die Referenzdaten auf den tragbaren Datenträger aufgebracht (Schritt S4). Im Schritt S5 wurde der tragbare Datenträger bereits an eine weitere Station übergeben, in der die elektrische Personalisierung vorgeommen wird. Zu Beginn der elektrischen Personalisierung werden zunächst im Schritt S5 die Referenzdaten, welche unsichtbar auf dem Datenträger angeordnet sind, ausgelesen. Mit Hilfe dieser Referenzdaten werden die Daten für die elektrische Personalisierung ermittelt und es erfolgt im Schritt S6 die elektrische Personalisierung, d.h. das Einschreiben der personen- bzw. herausgeberbezogenen Daten durch Einschreiben in den Speicher des integrierten Schaltkreises.

Die Fig. 2 zeigt stark vereinfacht ein Blockschaltbild der erfindungsgemäßen Vorrichtung. Mit 1 ist eine gemeinsame Datenbank gezeichnet, in der die Personalisierungsdaten, welche im Schritt S1 der Fig.1 erzeugt wurden, abgelegt werden. Ein Datensatz mit den Personalisierungsdaten einer Karte enthält jeweils eine Referenznummer 11, die Daten für die optische Personalisierung 12 sowie die Daten für die elektrische Personalisierung 13. Die Referenznummer kann beispielsweise eine fortlaufende, unverwechselbare Nummer sein. Als Referenznummer kann alternativ auch eine Nummer verwendet werden, die in den Personalisierungsdaten enthalten ist.

Im weiteren enthält die erfindungsgemäße Vorrichtung eine Station 2 zur optischen Personalisierung. Diese Station enthält eine Schreibvorrichtung 22 für die optische Personalisierung. Diese Schreibvorrichtung kann beispielsweise ein Laser für die Laserpersonalisierung sein, alternativ kann beispielsweise auch eine Einheit zum Hochprägen der personenbezogenen Daten vorgesehen sein. Die personenbezogenen Daten werden durch Laserung oder Hochprägen auf den tragbaren Datenträger 21 aufgebracht. In der gleichen Station wird zeitgleich oder unmittelbar aufeinanderfolgend auch die Referenznummer 24 mittels einer Schreibvorrichtung 25 aufgebracht. In vorteilhafter Weise erfolgt diese Aufbringung mit unsichtbarer Tinte bzw. mit fluoreszierenden Stoffen mittels eines Barcodedruckers. Selbstverständlich kann die Referenznummer auch auf andere Weise bzw. mittels eines anderen Codes aufgebracht werden.

Zur elektrischen Personalisierung ist eine Einheit 3 vorgesehen, welche eine Lese-/Schreibvorrichtung 31 enthält, die zur Kontaktierung mit den Kontaktelementen 23 des integrierten Schaltkreises des tragbaren Datenträgers 21 verbindbar ist. Zusätzlich enthält die Einheit 3 einen Leser 32, mit dem die nicht sichtbar aufgebrachte Referenznummer ausgelesen werden kann. Der Leser 32 ist mit der Datenbank 1 verbunden, so daß in der Datenbank mit Hilfe der ausgelesenen Referenznummer ein Datensatz für die elektrische Personalisierung zugeordnet werden kann.

Durch das erfindungsgemäße Verfahren kann auf einfache Art und Weise eine Trennung der optischen und elektrischen Personalisierung erfolgen, wobei trotzdem sichergestellt ist, daß beim personalisierten Datenträger die Daten der optischen und der elektrischen Personalisierung richtig zugeordnet sind.

Selbstverständlich kann auch eine Karte mit zusätzlichem Magnetstreifen personalisiert werden. In diesem Fall kann auch für die magnetische Personalisierung die jeweilige Referenznummer zur Zuordnung des Datensatzes verwendet werden.

Das in den Figuren 1 und 2 beschriebene Ausführungsbeispiel geht davon aus, daß die optische Personalisierung vor der elektrischen Personalisierung erfolgt. Bei einer Ausführungsform der Erfindung, die mit der elektrischen Personalisierung beginnt, sind in der Fig.1 die Schritte S3 und S6 zu vertauschen. In Bezug auf die Fig. 2 ist in diesem Fall die Schreibvorrichtung 25 in der Station 3 zum elektrischen Personalisieren und die Leseeinrichtung 32 in der Station 2 zur optischen Personalisierung angeordnet.

Als weitere Alternative kann das Bedrucken des Kartenköpers mit der nicht sichtbaren Referenznummer in einer separaten Station nach der Erzeugung der Referenzdaten (nach Schritt S2 der Fig. 1) erfolgen.

## Patentansprüche

1. Verfahren zum Personalisieren von tragbaren Datenträgern, welche eine zumindest teilweise ebene Oberfläche zum sichtbaren Aufbringen von Daten und einen integrierten Schaltkreis mit Speicher enthalten, wobei die im Speicher abgelegten Daten und die sichtbar auf dem Kartenkörper aufgebrachten Daten korreliert sind und die integrierten Schaltkreise und der Kartenkörper getrennt voneinander personalisiert werden, wobei bei der Erzeugung der Personalisierungsdatensätze zu den einzelnen Datensätzen jeweils eine Referenznummer gebildet wird, welche bei der Personalisierung des Kartenkörpers nicht sichtbar aufgebracht wird und die Daten für die optische Personalisierung sowie die Daten für die elektrische Personalisierung in einer gemeinsamen Datenbank abgelegt und mit der Referenznummer versehen werden, **dadurch gekennzeichnet, dass** die Daten für die optische Personalisierung und die Daten für die elektrische Personalisierung an getrennten Speicherbereichen abgelegt werden und über die jeweils zugeordnete, gleiche Referenznummer verbunden sind.

2. Verfahren nach Anspruch 1 **dadurch gekennzeichnet, dass** zum Aufdrucken der nicht sichtbaren Referenznummer fluoreszierende Stoffe verwendet werden.

3. Verfahren nach Anspruch 1 oder 2, **dadurch gekennzeichnet, daß** die Aufbringung der nicht sichtbaren Referenznummer mit der oder vor der optischen Personalisierung erfolgt und zur elektrischen Personalisierung der integrierten Schaltkreise zunächst die Referenznummer vom Kartenkörper ausgelesen wird und mit Hilfe dieser Referenznummer der Datensatz für die elektrische Personalisierung ausgewählt wird.

4. Verfahren nach Anspruch 1 oder 2, **dadurch gekennzeichnet, daß** die Aufbringung der nicht sichtbaren Referenznummer mit der oder vor der elektrischen Personalisierung erfolgt und zur optischen Personalisierung des Kartenkörpers zunächst die Referenznummer vom Kartenkörper ausgelesen wird und mit Hilfe dieser Referenznummer der Datensatz für die optische Personalisierung ausgewählt wird.

5. Verfahren nach einem der Ansprüche 1 bis 4, **dadurch gekennzeichnet, daß** die Referenznummer als Barcode auf den Kartenkörper aufgebracht wird.

6. Verfahren nach einem der Ansprüche 1 bis 5, **dadurch gekennzeichnet, daß** die Referenznummer auf der Kartenrückseite aufgebracht wird.

7. Vorrichtung zur Personalisierung von tragbaren Datenträgern, welche eine zumindest teilweise ebene Oberfläche zum sichtbaren Aufbringen von Daten und einen integrierten Schaltkreis mit Speicher enthalten, wobei die im Speicher abgelegten Daten und die sichtbar auf die Kartenkörper aufgebrachten Daten korreliert sind und die integrierten Schaltkreise und die Kartenkörper getrennt voneinander personalisiert werden, die Vorrichtung eine gemeinsame Datenbank enthält, in die die Daten für die optische Personalisierung sowie die Daten für die elektrische Personalisierung zusammen mit einer Referenznummer abgelegt werden können wobei die Referenznummer bei der personalisierung des Kartenkörpers nicht sichtbar aufgebracht wird, **dadurch gekennzeichnet, dass** die gemeinsame Datenbank eine Speicheraufteilung aufweist, gemäß der die Daten für die optische Personalisierung getrennt von den Daten für die elektrische Personalisierung abgelegt werden, wobei den jeweiligen Datensätzen die Referenznummer gemeinsam zugeordnet ist.

8. Vorrichtung nach Anspruch 7, **gekennzeichnet durch** eine Schreibvorrichtung zum Aufbringen von nicht sichtbaren Daten auf einen tragbaren Datenträger.

9. Vorrichtung nach Anspruch 8, **gekennzeichnet durch** eine Lesevorrichtung zum Lesen von nicht sichtbaren Daten, vorzugsweise eines nicht sichtbar auf einen tragbaren Datenträger angeordneten Barcodes.

## Claims

1. A method for personalizing portable data carriers containing an at least partly level surface for visible application of data, and an integrated circuit with memory, whereby the data stored in the memory and the data visibly applied to the card body are correlated, and the integrated circuits and the card body are personalized separately from each other, whereby upon generation of the personalization data sets there is formed for each of the individual data sets a reference number which is applied invisibly upon personalization of the card body, and the data for optical personalization and the data for electrical personalization are stored in a common database and provided with the reference number, **characterized in that** the data for optical personalization and the data for electrical personalization are stored at separate memory areas, being connected via the respectively associated, same reference number.

2. The method according to claim 1, **characterized in that** fluorescent substances are employed for printing the invisible reference number.

3. The method according to claim 1 or 2, **characterized in that** the application of the invisible reference number is effected upon or before the optical personalization, and for electrical personalization of the integrated circuits the reference number is first read out from the card body and the data set for electrical personalization is selected with the help of said reference number.

4. The method according to claim 1 or 2, **characterized in that** the application of the invisible reference number is effected upon or before the electrical personalization, and for optical personalization of the card body the reference number is first read out from the card body and the data set for optical personalization is selected with the help of said reference number.

5. The method according to any of claims 1 to 4, **characterized in that** the reference number is applied to the card body as a bar code.

6. The method according to any of claims 1 to 5, **characterized in that** the reference number is applied to the back of the card.

7. An apparatus for personalizing portable data carriers containing an at least partly level surface for visible application of data, and an integrated circuit with memory, whereby the data stored in the memory and the data visibly applied to the card bodies are correlated, and the integrated circuits and the card bodies are personalized separately from each other, the apparatus contains a common database in which the data for optical personalization and the data for electrical personalization can be stored together with a reference number, the reference number being applied invisibly upon personalization of the card body, **characterized in that** the common database has a memory partitioning according to which the data for optical personalization are stored separately from the data for electrical personalization, the reference number being associated commonly to the particular data sets.

8. The apparatus according to claim 7, **characterized by** a writing apparatus for applying invisible data to a portable data carrier.

9. The apparatus according to claim 8, **characterized by** a reading apparatus for reading invisible data, preferably a bar code invisibly arranged on a portable data carrier.

## Revendications

1. Procédé de personnalisation de supports de données portables qui comportent une surface au moins partiellement plane pour l'application visible de données et un circuit intégré avec mémoire, les données stockées dans la mémoire et les données appliquées visiblement sur le corps de carte étant corrélées et les circuits intégrés et le corps de carte étant personnalisés séparément les uns de l'autre, un numéro de référence étant respectivement constitué lors de la génération des jeux de données de personnalisation relatifs aux jeux de données distincts et étant appliqué de manière non visible lors de la personnalisation du corps de carte, et les données pour la personnalisation optique ainsi que les données pour la personnalisation électrique étant stockées dans une base de données commune et pourvues du numéro de référence, **caractérisé en ce que** les données pour la personnalisation optique et les données pour la personnalisation électrique sont stockées en des zones de mémoire séparées et sont reliées par le numéro de référence identique respectivement assigné.

2. Procédé selon la revendication 1, **caractérisé en ce que** ce sont des substances fluorescentes qui sont utilisées pour l'impression du numéro de référence non visible.

3. Procédé selon la revendication 1 ou 2, **caractérisé en ce que** l'application du numéro de référence non visible a lieu avant ou en même temps que la personnalisation optique et **en ce que**, pour la personnalisation électrique des circuits intégrés, le numéro de référence est tout d'abord lu sur le corps de carte et le jeu de données pour la personnalisation électrique est sélectionné à l'aide de ce numéro de référence.

4. Procédé selon la revendication 1 ou 2, **caractérisé en ce que** l'application du numéro de référence non visible a lieu avant ou en même temps que la personnalisation électrique et **en ce que**, pour la personnalisation optique du corps de carte, le numéro de référence est tout d'abord lu sur le corps de carte et le jeu de données pour la personnalisation optique est sélectionné à l'aide de ce numéro de référence.

5. Procédé selon une des revendications de 1 à 4, **caractérisé en ce que** le numéro de référence est appliqué en tant que code-barre sur le corps de carte.

6. Procédé selon une des revendications de 1 à 5, **caractérisé en ce que** le numéro de référence est appliqué sur le dos de la carte.

7. Dispositif de personnalisation de supports de données portables qui comportent une surface au moins partiellement plane pour l'application visible de données et un circuit intégré avec mémoire, les données stockées dans la mémoire et les données appliquées visiblement sur les corps de carte étant corrélées et les circuits intégrés et les corps de carte étant personnalisés séparément les uns aux autres, le dispositif comportant une base de données commune dans laquelle les données pour la personnalisation optique ainsi que les données pour la personnalisation électrique peuvent être stockées conjointement avec un numéro de référence, le numéro de référence étant appliqué non visiblement lors de la personnalisation du corps de carte, **caractérisé en ce que** la base de données commune présente un partitionnement de la mémoire selon lequel les données pour la personnalisation optique sont stockées séparément des données pour la personnalisation électrique, le numéro de référence étant assigné conjointement aux jeux de données respectifs.

8. Dispositif selon la revendication 7, **caractérisé par** un dispositif d'écriture pour l'application des données non visibles sur un support de données portable.

9. Dispositif selon la revendication 8, **caractérisé par** un dispositif de lecture pour la lecture de données non visibles, de préférence un code-barre non visible disposé sur un support de données portable.
